# FASCICULE DE BREVET EUROPEEN

(11) **EP 0 715 387 B1**
(45) Date de publication et mention de la délivrance du brevet: **24.03.1999**
(21) Numéro de dépôt: 95402712.4
(22) Date de dépôt: 01.12.1995
(51) Int. Cl.: H02H 11/00, H02J 13/00

(54) **Réglette du type comportant plusieurs socles de prises de courant et un dispositif unitaire de commande de la mise sous et hors tension desdits socles**
Mehrfachsteckdose und integrierte Steuerungsvorrichtung zum Ein- und Ausschalten der Steckdosen
Extension cord with multiple sockets and integrated control device for switching the sockets on and off

(30) Priorité: 02.12.1994 FR 9414505
(43) Date de publication de la demande: 05.06.1996
(73) Titulaire: PROFESSIONAL GENERAL ELECTRONIC PRODUCTS P.G.E.P., 92400 Courbevoie (FR)
(72) Inventeur: Blanchot, Michéle, F-78270 Cravent (FR); Potier, Daniel, F-27950 Saint-Just (FR)
(74) Mandataire: Loyer, Bertrand

(56) Documents cités:
- WO-A-94/16488
- DE-U- 9 015 518
- US-A- 5 239 164

## Description

La présente invention concerne d'une manière générale les réglettes comportant plusieurs blocs de prises de courant pour le branchement d'équipements électriques.

L'on connaît des réglettes pour la distribution d'électricité présentant des prises de courant disposées les unes à côté des autres. Ces réglettes sont usuellement disposées dans les locaux de manière à permettre à l'utilisateur de brancher tous les appareils qui lui sont nécessaires, à titre d'exemple, l'on pourra dans un bureau alimenter une lampe, un ordinateur, une imprimante, une machine à calculer etc...

Certaines de ces réglettes sont munies d'un dispositif assurant leur mise sous tension et hors tension, ce qui permet à l'utilisateur de n'avoir qu'un seul moyen de commande, interrupteur ou bouton poussoir, à manipuler pour effectuer la mise sous tension ou hors tension de tous les appareils reliés à la même réglette. Le document WO-A-94.16488 divulgue une réglette ayant les caractéristiques mentionnées dans le préambule de la revendication 1. Le dispositif de mise sous et hors tension peut être sollicité à partir de plusieurs moyens de commande, par exemple deux interrupteurs en va-et-vient ou plusieurs télérupteurs sollicitant un relais, une telle disposition permettrait de commander à distance la mise sous et hors tension de la réglette.

L'invention concerne ces dernières réglettes. Ces réglettes sont usuellement conçues pour alimenter de un à huit appareils, les réglettes assurant l'alimentation de un à quatre appareils étant les plus nombreuses.

Lorsque l'on commande le dispositif de mise sous tension de ces réglettes, tous les appareils qui lui sont reliés sont alimentés au même instant ce qui peut induire de forts appels de courant.

Lorsque l'on commande la mise hors tension de cette réglette, il peut se produire de façon analogue une brutale variation de tension et souvent un arc électrique.

Il est connu de disposer dans certains dispositifs électriques un module assurant la mise sous tension du dispositif au passage par zéro de la tension de manière à éviter les appels de courant, et la mise hors tension du dispositif au moment du passage par zéro de l'intensité de manière à éviter les arcs électriques.

Ce module reçoit la consigne de mise sous tension de l'appareil dans lequel il est monté et n'obéit qu'au moment opportun c'est-à-dire au passage par zéro de la tension. De même il n'appliquera la consigne de mise hors tension qu'au passage par zéro de l'intensité suivant la réception de l'ordre.

Ces modules sont très précis dans leur détection des passages par zéro de l'intensité et de la tension et sont donc onéreux.

Il est nécessaire de disposer un tel module dans chaque dispositif électrique ce qui, dans le cas des réglettes à dispositif de commande de mise sous tension et hors tension, nécessiterait la mise en place d'autant de modules qu'il y a de prises de courant dans la réglette.

Une telle solution serait parfaite du point de vue électrique mais serait beaucoup trop onéreuse dans le contexte habituel d'utilisation des réglettes.

L'invention se propose alors de fournir un dispositif réduisant les nuisances électriques, appels de courant et arcs, lors de la mise sous tension et hors tension d'une réglette de distribution de courant multisocles qui soit d'un coût raisonnable.

A cet effet, l'invention concerne une réglette du type comportant plusieurs socles de prises de courant et un dispositif unitaire de commande de la mise sous et hors tension desdits socles, caractérisée en ce qu'elle comporte un dispositif de pilotage de la mise sous et hors tension des socles assurant la mise sous tension des socles lors d'un passage par zéro de la tension et une mise hors tension des socles à des instants répartis dans le temps.

La réglette suivant l'invention est encore remarquable en ce que :
- la mise sous tension des socles est également faite à des instants répartis dans le temps,
- la répartition dans le temps est commandée par un dispositif de séquencement,
- les mises hors service séquentielles des socles sont faites lors de passages par zéro de la tension,
- le dispositif de pilotage utilise une horloge synchronisée avec la tension du secteur dont les signaux correspondent à des passages par zéro de la tension,
- l'intervalle de temps séparant deux instants répartis dans le temps est au minimum de 200 millisecondes,
- l'intervalle de temps séparant deux instants répartis dans le temps est un nombre entier de fois 200 millisecondes, par exemple 1600 millisecondes,
- le dispositif de pilotage peut recevoir et/ou fournir un signal de commande d'un autre (à un autre) dispositif de pilotage auquel il est relié.

L'invention sera mieux comprise grâce à la description qui va suivre donnée à titre d'exemple non limitatif en référence aux dessins annexés dans lesquels :
- la figure 1 montre une réglette comportant plusieurs socles selon l'invention,
- la figure 2 est un diagramme temporel représentant l'état de différents éléments du dispositif,
- la figure 3 montre un exemple de réalisation du module de pilotage suivant l'invention,
- la figure 4 est un exemple de réalisation des modules de puissance utilisés dans le module représenté à la figure 3.

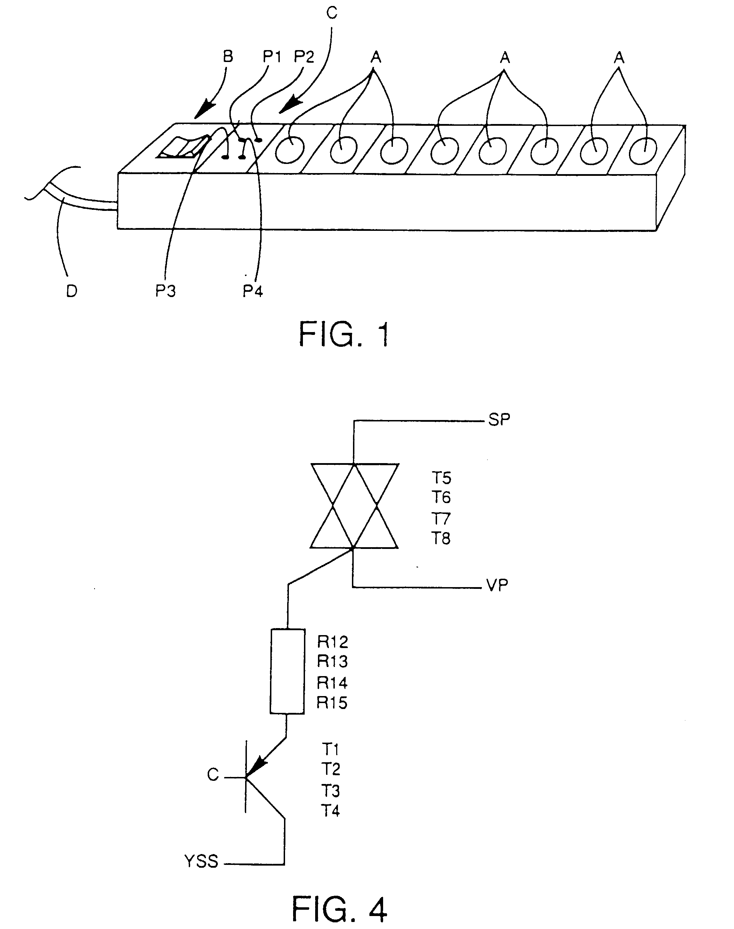

L'invention s'applique à des réglettes comportant plusieurs socles A de prise de courant montés en série et un dispositif unitaire B de mise sous tension ou hors tension telles que représenté schématiquement à la figure 1. Ces réglettes sont généralement formées par un bâti assez long pour présenter sur sa face avant le nombre de socles A demandé, usuellement de un à huit, et dans lequel sont disposés des conducteurs d'alimentation et de mise à la terre. La réglette présentée à la figure 1 porte un moyen de sollicitation du dispositif de mise sous tension ou hors tension près de l'extrémité par laquelle elles sont raccordées au circuit de distribution du courant, par exemple par un câble D.

Ce moyen peut être un interrupteur à deux positions stables comme représenté au dessin, un bouton-pressoir changeant d'état à chaque pression ou tout autre moyen de commande par impulsions, par exemple une touche sensitive. Ce moyen peut être unique comme représenté au dessin, ou l'usager peut avoir à sa disposition plusieurs tels moyens raccordés par un système de va-et-vient ou par un montage avec relais.

Les socles de prise de courant sont par exemple des socles permettant le passage de 16 Ampères sous 230 Volts.

Suivant l'invention, la réglette comporte un dispositif de pilotage C de la mise sous tension ou hors tension tel qu'il assure la mise sous tension des socles lors du passage par zéro de la tension de manière à éviter les appels de courant, ce dispositif de pilotage est pourvu d'un dispositif de séquencement assurant une mise hors service des socles à des instants répartis dans le temps après la commande de mise hors tension de la réglette.

Un microprocesseur prévu dans le dispositif de pilotage reçoit l'ordre de mise sous tension en provenance du dispositif unitaire de commande, ce microprocesseur pilote la mise sous tension des socles de la réglette à un instant suivant la réception de l'ordre pour lequel la tension est nulle.

Le dispositif de séquencement est tel qu'à la suite de l'ordre de mise hors tension, les socles sont successivement mis hors tension à des instants différents.

Les instants correspondants à des passages par zéro de la tension étant déjà connus pour le pilotage de la mise sous tension, ce sont ces instants qui sont choisis pour le pilotage de la mise hors tension. A ces instants, l'intensité n'est pas nulle mais est toujours peu importante.

Les arcs électriques dus aux mises hors tension ne sont donc pas totalement évités mais sont réduits. Leur incidence sur le dispositif électrique est encore minimisée par le fait que les appareils reliés à la réglette sont mis successivement hors tension les uns à la suite des autres.

Le dispositif de pilotage de la mise sous et hors tension de la réglette proposé par l'invention est un dispositif peu onéreux assurant une réduction tout à fait significative des problèmes d'appels de courant et d'arcs électriques rencontrés lors de l'utilisation de matériels électriques.

Dans la variante de réalisation représentée aux dessins, l'on utilise également le dispositif de séquencement au moment de la mise sous tension de la réglette. Cette variante de réalisation présente l'avantage de permettre l'utilisation d'une détection du passage à zéro de la tension qui n'est pas d'une très grande exactitude du fait que les effets des appels de courant pouvant se produire lors de la mise sous tension sont amoindris en étant échelonnés dans le temps. L'on peut alors mettre en oeuvre des moyens de détection des zéros de tension peu coûteux. Dans l'exemple représenté au dessin, l'on accepte une erreur de synchronisation des signaux de commande avec le passage à zéro de la tension de 0,3 milliseconde, ce qui a pour effet que la mise sous tension se fera à une tension comprise entre 0 Volt et un maximum de 30 Volts.

L'on décrira plus précisément cette variante de réalisation.

Le dispositif utilise une horloge synchronisée avec la tension du secteur, ou obtenue par dérivation, dont les signaux correspondent à des passages par zéro de la tension.

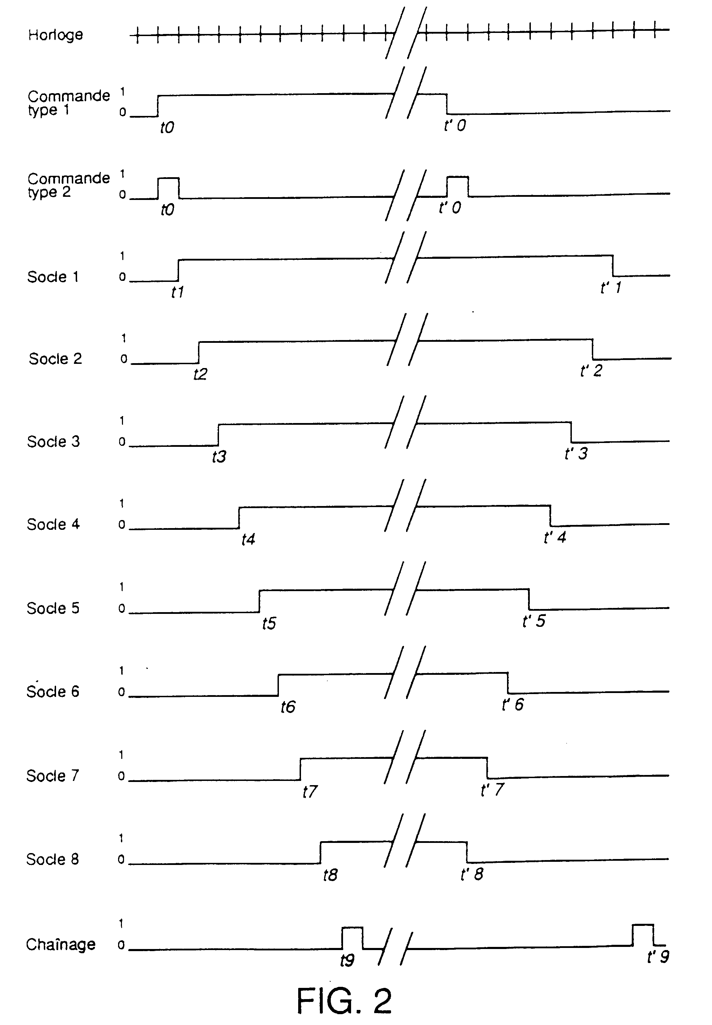

L'on a représenté à la figure 2 les signaux d'une commande bistable, appelée de type 1, et d'une commande par impulsion, appelée de type 2.

Comme représenté à la figure 2, le premier socle, socle 1, est mis sous tension lors du signal d'horloge t1 suivant l'instant t0 de commande de mise sous tension de la réglette.

Le second socle est mis sous tension au moment du signal t2 suivant t1.

Les socles de prise de courant sont ainsi mis sous tension les uns après les autres à des moments espacés dans le temps pour lesquels la tension passe par zéro.

L'intervalle de temps séparant deux signaux d'horloge utilisés pour la mise sous tension de deux socles successifs est choisi de manière à permettre aux équipements mis sous tension d'établir leur fonctionnement normal, c'est-à-dire de laisser passer l'appel de courant accompagnant le démarrage d'un appareil électrique.

Dans la variante de réalisation du dispositif de séquencement suivant l'invention représentée au dessin, cet intervalle de temps est au minimum de 200 millisecondes. Un tel intervalle est suffisant pour la mise en fonctionnement de très nombreux appareils électriques et présente l'avantage d'être assez faible pour ne pas être perceptible par l'utilisateur.

Les signaux de l'horloge sont alors prévus toutes les 200 millisecondes. Il est bien entendu possible de prévoir des signaux d'horloge plus rapprochés dans le temps et de n'effectuer la commande de mise sous tension qu'après un nombre prédéterminé de signaux.

Lorsqu'un usager désire piloter la mise sous tension d'appareils comportant un moteur dont le temps de mise en régime est plus long, par exemple un magnétoscope, il est possible de proposer un intervalle de mise sous tension des socles plus long en choisissant un nombre entier de fois 200 millisecondes, par exemple 1600 millisecondes.

La mise sous tension des socles successifs est alors commandée tous les huit signaux d'horloge.

Le séquencement utilisé pour la mise hors tension des socles est, dans l'exemple représenté, réalisé en sens inverse dans la mesure ou le socle 8 est mis hors service en premier lieu au signal d'horloge délivré au temps t'8 suivant l'instant t'0 de commande.

Le socle 1 est le dernier à être mis hors service à l'instant t'1.

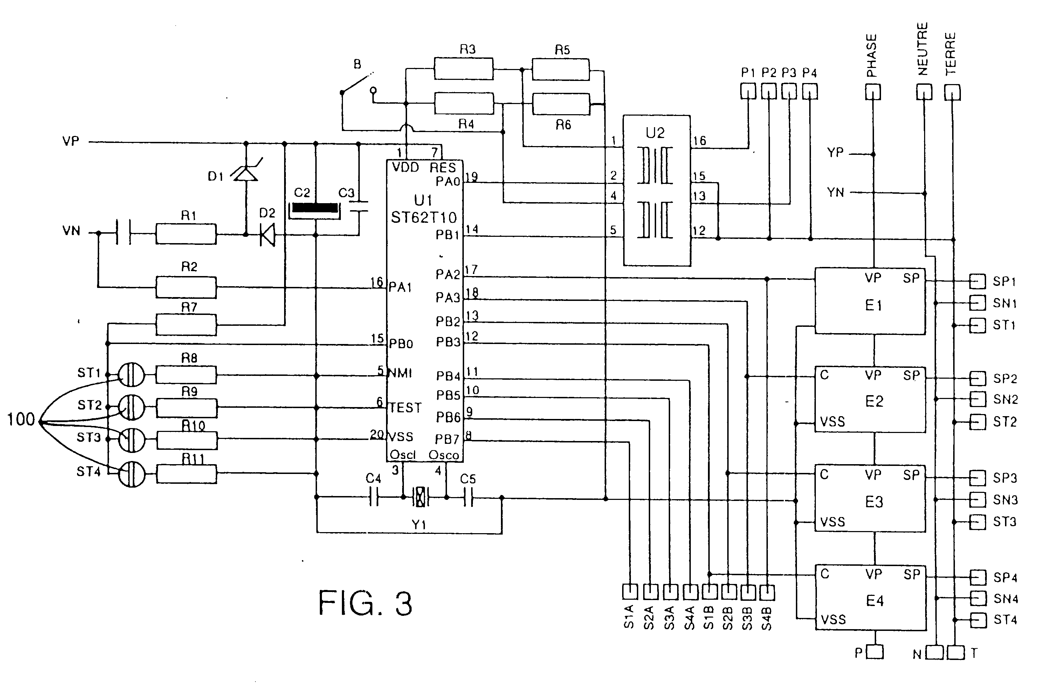

La figure 3 présente une réalisation du module assurant le pilotage des mises sous tension et hors tension des socles de la réglette.

Le dispositif de mise sous et hors tension met la résistance R4 en court-circuit lors de la demande de mise sous tension.

Ce module comporte un microprocesseur U1 qui perçoit cet état.

Le microprocesseur U1 reçoit un signal d'horloge sur son entrée 16.

Ce microprocesseur U1 délivre des signaux de commande sur ses sorties 8 à 13 et 17, 18.

La sortie 17 assure la commande de l'étage de puissance E1 dont dépendent les mises sous et hors tension du socle 1.

De même, les sorties 18, 13 et 12 assurent respectivement la commande des étages de puissance E2, E3, E4 liés aux socles 2 à 4.

La figure 4 montre une réalisation d'un étage de puissance. De manière connue en soi, cet étage de puissance est constitué d'un triac dont la gâchette est commandée par un transistor. Un moyen d'antiparasitage est prévu dans ce dispositif. Un tel étage de puissance a un temps de réponse faible et permet une bonne synchronisation des commandes avec le moment de passage par zéro de la tension.

Pour la commande de huit socles, un ensemble supplémentaire de quatre étages de puissance est commandé par les sorties 8 à 11 en étant connecté aux bornes S1A, S2A, S3A et S4A prévues à cet effet.

Le module est ainsi constitué pour le pilotage de quatre socles ce qui correspond aux utilisations les plus courantes et est complété par le branchement simple d'un ensemble supplémentaire pour le pilotage d'une réglette à huit socles.

Il est possible de commander la mise sous tension de plus de huit socles en effectuant un chaînage reliant des réglettes.

Dans une installation mettant en oeuvre un chaînage, la commande de mise sous ou hors tension est fournie à la première réglette.

Le dispositif de pilotage que comporte cette réglette assure la mise sous tension successive des socles de cette première réglette puis délivre au temps t9 un signal de commande au dispositif de pilotage de la seconde réglette de la chaîne qui à son tour assure la mise sous tension échelonnée des socles de cette seconde réglette avant d'envoyer un signal de commande au dispositif de pilotage d'une troisième réglette. Cette procédure est répétée jusqu'à la mise sous tension du dernier socle de la dernière réglette de la chaîne.

Pour ce faire, les modules de pilotage présentent des plots P1 à P4 accessibles de l'extérieur de la réglette. Deux de ces plots, P3 et P4 assurent la sortie d'un signal de commande en direction d'un autre module de pilotage tandis que les deux autres, P1 et P2, permettent l'entrée d'un tel signal de commande.

Dans le cas d'un chaînage, la première réglette reçoit les ordres de commande d'un dispositif usuel, par exemple un interrupteur ou un bouton pressoir comme déjà décrit, l'on dispose un câble sur les plots P3 et P4 et l'on relie l'autre extrémité de ce câble aux plots P1 et P2 du module de pilotage d'une seconde réglette.

Les ordres reçus sur les plots P1 et P2 par la seconde réglette sont utilisés par son module comme les ordres qu'il recevrait d'un dispositif de commande de type 2. Le module de cette seconde réglette effectue alors les ordres de mise sous ou hors tension demandés puis envoie à nouveau un ordre sur ses plots P3 et P4 afin qu'il soit mis en oeuvre dans une troisième réglette lui étant raccordée.

L'on peut ainsi relier les unes aux autres plusieurs réglettes pour la mise sous et hors tension de tous les appareils d'un local. Ce chaînage sera par exemple utilisé dans les régies où il est courant d'utiliser un grand nombre d'appareils.

Afin de définir l'énergie qui doit être disponible à la sortie d'un module de pilotage pour assurer la commande d'un second module, l'on considère que le fil reliant deux réglettes consécutives n'aura pas plus de 10 mètres de longueur, ce qui est une longueur largement suffisante dans la majorité des utilisations pour aller d'un endroit à un autre d'un local.

Le module est, de fabrication, conçu pour fonctionner pour une réglette disposée en première position dans une chaîne, donc recevant les ordres du dispositif de mise sous ou hors tension, pour obéir à un moyen de type 1, pour piloter quatres socles avec un intervalle de temps de 200 millisecondes.

Ce module comporte quatres contacts coupés 100 sur lesquels l'on peut mettre une goutte de soudure en vue de modifier son fonctionnement de base afin de l'informer qu'il n'est pas en première position, et/ou qu'il doit obéir à une commande de type 2, et/ou qu'il doit piloter 8 socles, et/ou que l'intervalle doit être de 1600 millisecondes.

Le dispositif suivant l'invention permet de limiter la pollution magnétique due aux mises sous et hors tension des appareils électriques en diminuant les appels de courant et les flashes de courant dans la ligne.

## Revendications

1. Réglette du type comportant plusieurs socles de prises de courant (A) et un dispositif unitaire (B) de commande de la mise sous et hors tension desdits socles, caractérisée en ce qu'elle comporte un dispositif de pilotage (C) de la mise sous et hors tension des socles assurant la mise sous tension des socles lors d'un passage par zéro de la tension et une mise hors tension des socles à des instants répartis dans le temps.

2. Réglette selon la revendication 1, caractérisée en ce que la mise sous tension des socles est également faite à des instants répartis dans le temps.

3. Réglette selon la revendication 1 ou la revendication 2, caractérisée en ce que la répartition dans le temps est commandée par un dispositif de séquencement.

4. Réglette selon l'une quelconque des revendications précédentes, caractérisée en ce que les mises hors service des socles sont faites lors de passages par zéro de la tension.

5. Réglette selon l'une quelconque des revendications précédentes, caractérisée en ce que le dispositif de pilotage utilise une horloge synchronisée avec la tension du secteur dont les signaux correspondent à des passages par zéro de la tension.

6. Réglette selon l'une quelconque des revendications 1 à 5, caractérisée en ce que l'intervalle de temps séparant deux instants répartis dans le temps est au minimum de 200 millisecondes.

7. Réglette selon la revendication 6, caractérisée en ce que l'intervalle de temps séparant deux instants répartis dans le temps est un nombre entier de fois 200 millisecondes, par exemple 1600 millisecondes.

8. Réglette selon l'une quelconque des revendications 1 à 7, caractérisée en ce que le dispositif de pilotage peut recevoir et/ou fournir un signal de commande d'un autre (à un autre) dispositif de pilotage auquel il est relié.

## Patentansprüche

1. Steckerleiste der Art mit mehreren Steckdosen (A) und einer integrierten Steuerungsvorrichtung (B) zum Ein- und Ausschalten der Steckdosen, dadurch gekennzeichnet, daß sie eine Steuereinrichtung (C) zum Ein- und Ausschalten der Steckdosen umfaßt, die das Einschalten der Steckdosen bei einem Nulldurchgang der Spannung und ein Ausschalten der Steckdosen zu zeitlich zueinander versetzten Zeitpunkten gewährleistet.

2. Steckerleiste nach Anspruch 1, dadurch gekennzeichnet, daß das Einschalten der Steckdosen ebenfalls zu zeitlich zueinander versetzten Zeitpunkten durchgeführt wird.

3. Steckerleiste nach Anspruch 1 oder Anspruch 2, dadurch gekennzeichnet, daß die zeitliche Versetzung durch eine Folgesteuereinrichtung gesteuert wird.

4. Steckerleiste nach einem der vorhergehenden Ansprüche, dadurch gekennzeichnet, daß die Ausschaltvorgänge der Steckdosen jeweils bei Nulldurchgängen der Spannung erfolgen.

5. Steckerleiste nach einem der vorhergehenden Ansprüche, dadurch gekennzeichnet, daß die Steuereinrichtung eine Uhr verwendet, die mit der Spannung des Sektors synchronisiert ist, dessen Signale Nulldurchgängen der Spannung entsprechen.

6. Steckerleiste nach einem der Ansprüche 1 bis 5, dadurch gekennzeichnet, daß das Zeitintervall, das zwei zeitlich zueinander versetzte Zetpunkte trennt, mindestens 200 Millisekunden beträgt.

7. Steckerleiste nach Anspruch 6, dadurch gekennzeichnet, daß das Zeitintervall, das zwei zueinander versetzte Zeitpunkte voneinander trennt, ein ganzzahliges Mehrfaches von 200 Millisekunden, z. B. 1600 Millisekunden, beträgt.

8. Steckerleiste nach einem der Ansprüche 1 bis 7, dadurch gekennzeichnet, daß die Steuereinrichtung ein Steuersignal von einer anderen (oder an eine andere) Steuereinrichtung empfangen und/oder abgeben kann, mit der sie verbunden ist.

## Claims

1. An extension lead of the type comprising a plurality of socket outlets (A) and an integrated control device (B) for switching said sockets on and off, characterised in that it comprises a fine-control device (C) for switching the sockets on and off which switches the sockets on when the voltage passes through zero and switches the sockets off at intervals over time.

2. An extension lead according to Claim 1, characterised in that the sockets are also switched on at intervals over time.

3. An extension lead according to Claim 1 or Claim 2, characterised in that the distribution of intervals over time is controlled by a sequencing device.

4. An extension lead according to any one of the preceding claims, characterised in that the sockets are switched off when the voltage passes through zero.

5. An extension lead according to any one of the preceding claims, characterised in that the fine-control device uses a clock synchronised with the mains voltage, the signals of which correspond to the voltage passing through zero.

6. An extension lead according to any one of Claims 1 to 5, characterised in that the gap between two intervals over time is at least 200 milliseconds.

7. An extension lead according to Claim 6, characterised in that the gap between two intervals over time is an integer which is a multiple of 200 milliseconds, for example 1600 milliseconds.

8. An extension lead according to any one of claims 1 to 7, characterised in that the fine-control device can receive and/or supply a control signal from/to another fine-control device to which it is connected.
